# EUROPEAN PATENT SPECIFICATION

(11) **EP 3 937 299 B1**
(45) Date of publication and mention of the grant of the patent: **27.05.2026**
(21) Application number: 20891701.3
(22) Date of filing: 02.11.2020
(51) Int. Cl.: H01M 50/20, H01M 50/50

(54) **BATTERY MODULE AND BATTERY PACK**
BATTERIEMODUL UND BATTERIESATZ
MODULE DE BATTERIES ET BLOC-BATTERIE

(30) Priority: 25.11.2019 KR 20190152650
(43) Date of publication of application: 12.01.2022
(73) Proprietor: LG Energy Solution, Ltd., Seoul 07335 (KR)
(72) Inventor: LEE, Bum-Jick, Daejeon 34122 (KR); SON, Young-Su, Daejeon 34122 (KR)
(74) Representative: Plasseraud IP
(86) International application number: PCT/KR2020/015154
(87) International publication number: WO 2021/107429

(56) References cited:
- EP-A1- 2 290 731
- WO-A1-2016/178315
- WO-A1-2017/169728
- JP-A- 2000 108 687
- JP-A- 2008 251 471
- JP-A- 2019 032 924
- KR-A- 20170 103 227

## Description

### TECHNICAL FIELD

The present disclosure relates to a battery module and a battery pack including the same, and more particularly, to a battery module with improved manufacture efficiency and durability, and a battery pack including the same.

The present application claims priority to Korean Patent Application No. 10-2019-0152650 filed on November 25, 2019 in the Republic of Korea.

### BACKGROUND ART

Secondary batteries currently commercialized include nickel cadmium batteries, nickel hydrogen batteries, nickel zinc batteries, lithium secondary batteries and so on. Among them, the lithium secondary batteries are more highlighted in comparison to nickel-based secondary batteries due to advantages such as free charging and discharging, caused by substantially no memory effect, very low self-discharge rate, and high energy density.

The lithium secondary battery mainly uses lithium-based oxides and carbonaceous materials as a positive electrode active material and a negative electrode active material, respectively. In addition, the lithium secondary battery includes an electrode assembly in which a positive electrode plate coated with the positive electrode active material and a negative electrode plate coated with the negative electrode active material are disposed with a separator being interposed therebetween, and a cylindrical battery can serving as an exterior for hermetically containing the electrode assembly together with an electrolyte.

In recent years, secondary batteries have been widely used not only in small-sized devices such as portable electronic devices but also in medium-sized or large-sized devices such as vehicles and power storage devices. When the secondary batteries are used in the middle-sized or large-sized devices, a large number of secondary batteries are electrically connected to increase capacity and power.

Meanwhile, recently, as the need for a large-capacity structure increases along with the utilization as an energy storage source, the demand for a battery pack including a plurality of secondary batteries connected in series and/or in parallel, a module case accommodating the secondary batteries therein, a bus bar for electrically connecting the plurality of secondary batteries, a battery management system (BMS), and a pack housing accommodating these components therein increases.

At this time, the pack housing generally uses a metal material with excellent mechanical rigidity to protect internal components from external impact. However, if the bus bar comes into contact with the metal pack housing, a short circuit may occur, which may cause thermal runaway or ignition of the secondary battery. In order to prevent such an accident, in the prior art, it is common to interpose an insulating sheet with electric insulation between the pack housing and the bus bar. However, in order to fix the insulation sheet at the outer side of the bus bar, complicated manual operations are required to apply an adhesive at a fixing part and attach the insulation sheet in place. Accordingly, the production cost is increased due to the increase in working cost and a prolonged production time of the battery pack.

In addition, if the conventional battery pack is mounted to a vehicle, the battery pack may be exposed to external shocks and vibrations of the vehicle body for a long time while the vehicle is moving. Accordingly, the secondary battery, which is an internal component of the battery pack, frequently collides with an internal frame, which may cause damage to the body or cause problems such as disconnection of the electrical connection structure between the secondary battery and the bus bar.

JP2019032924, WO2017/169728, JP2008251471, EP2290731 and WO2016/178315 disclose battery modules with bus bars.

### DISCLOSURE

### Technical Problem

The present disclosure is designed to solve the problems of the related art, and therefore the present disclosure is directed to providing a battery module with improved manufacture efficiency and durability.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

According to claim 1, the invention is a battery module, comprising:
a plurality of cylindrical battery cells;
a module case having an accommodation portion for accommodating the plurality of cylindrical battery cells;
a bus bar including a body portion having electric conductivity and configured in a plate shape, and a connection portion configured to electrically connect the plurality of cylindrical battery cells to each other;
a fill material having electric insulation and hardened in a state of being filled between at least two of the plurality of cylindrical battery cells, the module case and the bus bar; and
an inlet hole is formed in the accommodation portion of the module case so that the fill material is introduced therethrough and has a perforated shape.

Also, the fill material may be configured to surround at least a part of an outer surface of each of the plurality of cylindrical battery cells, the module case and the bus bar.

Moreover, the accommodation portion may have an open structure that is opened so that side portions of the plurality of cylindrical battery cells accommodated therein are exposed to each other, and
the fill material may have a structure that connects the plurality of cylindrical battery cells to each other through the open structure.

In addition, the connection portion of the bus bar may include:
a connection hole perforated at a location corresponding to an electrode terminal of the cylindrical battery cell; and
a connection terminal configured to extend and protrude from the connection hole to be connected to the electrode terminal of the cylindrical battery cell.

Further, the fill material may be filled between the connection hole and the electrode terminal at least partially.

Also, an opening may be formed in the body portion of the bus bar so that the fill material is introduced therethrough.

Moreover, a fixing hole may be formed in the body portion of the bus bar so that the fill material is introduced therethrough.

Further, the module case may include a guide wall having electric insulation and configured to protrude outward so that the fill material is guided to be injected between at least two of the plurality of cylindrical battery cells, the module case and the bus bar.

Also, in order to accomplish the above object, a battery pack according to the present disclosure comprises at least one battery module according to the present disclosure.

In addition, in order to accomplish the above object, a vehicle according to the present disclosure comprises at least one battery pack according to the present disclosure.

### Advantageous Effects

According to an embodiment of the present disclosure, since the battery module of the present disclosure includes the fill material having electric insulation and hardened in a state of being filled between at least two of the plurality of cylindrical battery cells, the module case and the bus bar, it is possible to exclude a separate configuration provided to achieve electrical insulation between the bus bar and other conductive objects, thereby reducing manufacturing cost and manufacturing time. In addition, since the fill material may fix or protect a region where components of the battery module are vulnerable to frequent vibrations or strong impacts, it is possible to improve durability of the components to which the fill material is applied.

Also, according to an embodiment of the present disclosure, the battery module according to another embodiment may be easily manufactured since the process of filling and hardening the fill material is simple. In addition, the shape of the fill material surrounding all the components of the battery module may prevent a rapid temperature change of the battery module by adequately absorbing the heat generated inside by means of the sufficient heat capacity of the fill material.

In addition, according to an embodiment of the present disclosure, since the fill material has a structure to connect the plurality of cylindrical battery cells to each other through the open structure, the heat generated from the plurality of cylindrical battery cells may be effectively transferred to the outside. In addition, the fill material may protect the plurality of cylindrical battery cells exposed to the outside from an external impact. Further, when the battery module is exposed to a frequent vibration environment such as a vehicle, it is possible to stably fix the plurality of cylindrical battery cells, thereby improving durability of the plurality of cylindrical battery cells.

Moreover, according to another embodiment of the present disclosure, since the plurality of openings are formed in the bus bar, the melted fill material is completely filled between the bus bar and the module case through the openings. Accordingly, the battery module of the present disclosure has few empty spaces between the bus bar and the module case, which are not filled with the fill material, so that heat may be accumulated in the empty space or the fixing force between the bus bar and the module case may be further increased.

Also, according to another embodiment of the present disclosure, since the inlet hole is formed in the accommodation portion of the module case so that the fill material is introduced, the fill material may be properly introduced between the hollow structure of the accommodation portion and the cylindrical battery cell. Accordingly, by the fill material, the coupling force between the accommodation portion and the cylindrical battery cell may be increased. As a result, the durability of the battery module may be increased.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing a battery pack according to an embodiment of the present disclosure.
FIG. 2 is an exploded perspective view schematically showing some components of the battery pack according to an embodiment of the present disclosure.
FIG. 3 is a sectional view schematically showing a cylindrical battery cell according to an embodiment of the present disclosure.
FIG. 4 is a perspective view schematically showing some bus bars of a battery module according to an embodiment of the present disclosure.
FIG. 5 is a perspective view schematically showing the battery module according to an embodiment of the present disclosure.
FIG. 6 is a perspective view schematically showing a battery module according to another embodiment of the present disclosure.
FIG. 7 is a perspective view schematically showing some components of the battery module according to an embodiment of the present disclosure.
FIG. 8 is a partial perspective enlarged view showing a region D of a plurality of cylindrical battery cells and a module case of the battery module according to an embodiment of the present disclosure.
FIG. 9 is a partial sectional view schematically showing the battery module of FIG. 5, taken along the line C-C'.
FIG. 10 is a perspective view schematically showing some bus bars of a battery module according to another embodiment of the present disclosure.
FIG. 11 is a partially enlarged view schematically showing the battery module according to another embodiment of the present disclosure, which corresponds to a region C of the module housing of FIG. 2.
FIG. 12 is a perspective view schematically showing a battery module according to another embodiment of the present disclosure.

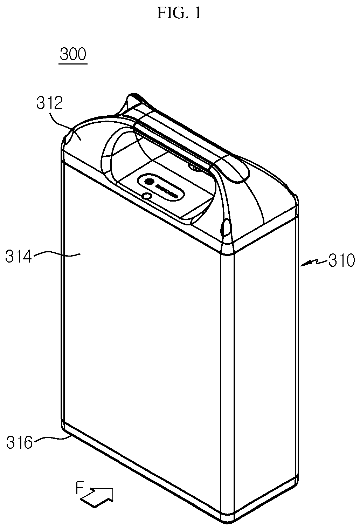

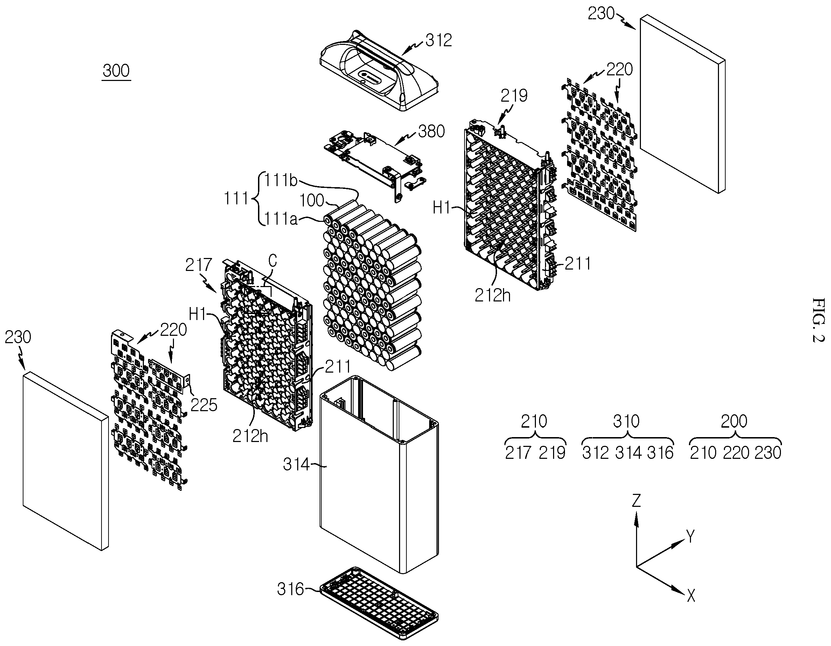

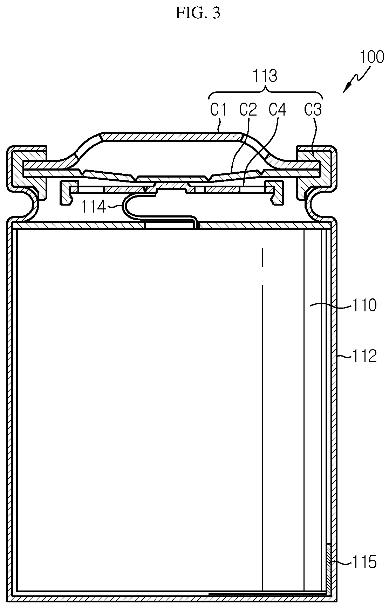

FIG. 1 is a perspective view schematically showing a battery pack according to an embodiment of the present disclosure. FIG. 2 is an exploded perspective view schematically showing some components of the battery pack according to an embodiment of the present disclosure. Also, FIG. 3 is a sectional view schematically showing a cylindrical battery cell according to an embodiment of the present disclosure.

Referring to FIGS. 1 to 3, a battery pack 300 of the present disclosure includes a BMS 380, a battery module 200 and a pack housing 310.

The battery module 200 may include a plurality of cylindrical battery cells 100, a module case 210, a bus bar 220, and a fill material 230.

Here, the cylindrical battery cell 100 may include an electrode assembly 110, a battery can 112, and a cap assembly 113. At this time, the cylindrical battery cell 100 may be a lithium secondary battery.

The electrode assembly 110 may have a structure in which a positive electrode plate and a negative electrode plate are wound with a separator being interposed therebetween. Also, a positive electrode tab 114 may be attached to the positive electrode plate to be connected to the cap assembly 113, and a negative electrode tab 115 may be attached to the negative electrode plate to be connected to a bottom of the battery can 112.

The battery can 112 may have an empty space formed therein to accommodate the electrode assembly 110. In particular, the battery can 112 may be configured in a cylindrical or rectangular shape with an open top. In addition, the battery can 112 may be made of a metal material such as steel or aluminum in order to secure rigidity. Also, a negative electrode tab may be attached to the bottom of the battery can 112 so that not only the lower portion of the battery can 112 but also the battery can 112 itself may function as a negative electrode terminal.

The cap assembly 113 may be coupled to the top open portion of battery can 112 to seal an open end of the battery can 112. The cap assembly 113 may have a circular shape or a rectangular shape according to the shape of the battery can 112, and may include subcomponents such as a top cap C1, a safety vent C2, and a gasket C3.

Here, the top cap C1 is positioned at the top of the cap assembly 113 and may be configured to protrude upward. In particular, in the cylindrical battery cell 100, the top cap C1 may function as a positive electrode terminal. Accordingly, the top cap C1 may be electrically connected to another cylindrical battery cell 100, a load, or a charging device through an external device, for example, the bus bar 220. The top cap C1 may be made of, for example, a metal material such as steel or aluminum.

The safety vent C2 may be configured to change its shape when an internal pressure of the cylindrical battery cell 100, namely an internal pressure of the battery can 112, increases above a certain level. In addition, the gasket C3 may be made of a material with electric insulation so that edges of the top cap C1 and the safety vent C2 may be insulated from the battery can 112.

Meanwhile, the cap assembly 113 may further include a current interrupt device C4. The current interrupt device C4 is also called CID. If the shape of the safety vent C2 is reversed as the internal pressure of the battery is increased due to gas generation, the contact between the safety vent C2 and the current interrupt device C4 may be cut off or the current interrupt device C4 may be damaged to cut off the electrical connection between the safety vent C2 and the electrode assembly 110.

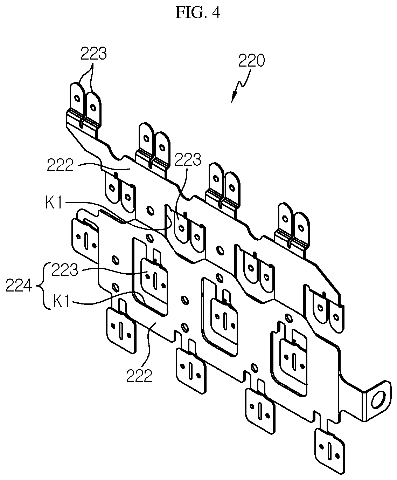

The configuration of the cylindrical battery cell 100 is widely known to those skilled in the art at the time of filing of this application and thus will not be described in detail in this specification. In addition, although an example of the cylindrical battery cell 100 is shown in FIG. 4, the battery module 200 according to the present disclosure is not limited to a specific type of the cylindrical battery cell 100. That is, various types of cylindrical battery cells 100 known at the time of filing of this application may be employed in the battery module 200 according to the present disclosure.

Moreover, the cylindrical battery cell 100 of FIG. 3 is not necessarily limited to a cylindrical shape, and a rectangular battery cell may also be applied to the battery module 200 according to the present disclosure.

Referring to FIG. 2 again, the plurality of cylindrical battery cells 100 may be arranged in a left and right direction (X-axis direction) and an upper and lower direction (Z-axis direction). For example, as shown in FIG. 2, the plurality of cylindrical battery cells 100 may be configured to be arranged in an upper and lower direction and a left and right direction. Further, the plurality of cylindrical battery cells 100 may be arranged such that tubular portions of the cylindrical battery cans 112 (FIG. 3) face each other.

In particular, in the battery module 200 according to the present disclosure, the plurality of cylindrical battery cells 100 may be configured to be laid down in a horizontal direction (Y-axis direction). Here, the horizontal direction means a direction parallel to the ground. That is, as shown in FIG. 2, 112 cylindrical battery cells 100 may be configured to be elongated in a front and rear direction, respectively. In this case, in the entire cylindrical battery cells 100, when viewed in an F direction of FIG. 1, the positive electrode terminal 111a and the negative electrode terminal 111b may be located in the front and rear directions.

Meanwhile, terms representing directions such as front, rear, left, right, upper and lower directions used in this specification may vary depending on the position of an observer or the shape of an object. However, in this specification, for convenience of description, directions such as front, rear, left, right, upper and lower directions will be distinguishably used, based on when viewed in the F direction.

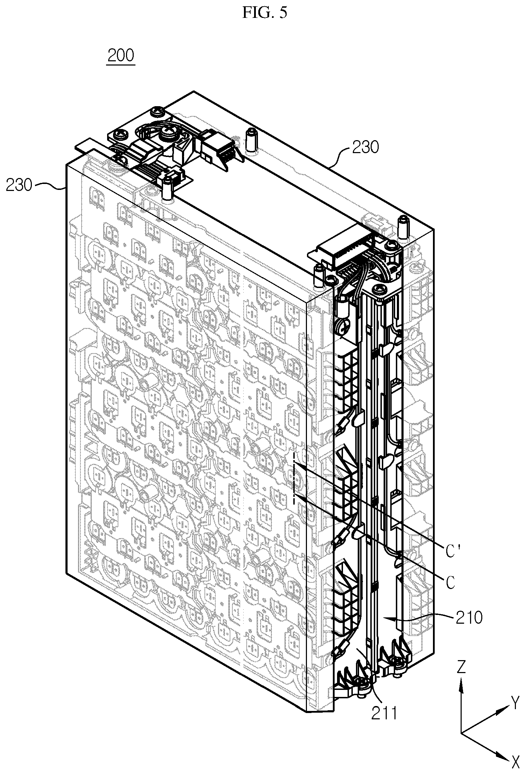

Referring to FIG. 5 along with FIG. 2, the module case 210 may include an accommodation portion 212h for accommodating the plurality of cylindrical battery cells 100 and an outer wall 211.

In addition, in the accommodation portion 212h of the module case 210, at least two cylindrical battery cells 100 may be accommodated in the form of being laid down in a horizontal direction (Y-axis direction). The stacking direction is not essentially limited to one direction, and may also be an upper and lower direction (Z-axis direction) depending on the direction in which the cylindrical battery cell 100 is laid down.

Moreover, the outer wall 211 may be formed to surround the inner space in which the plurality of cylindrical battery cells 100 are inserted and accommodated. In addition, when viewed in the F direction of FIG. 1, the module case 210 may include a front wall, a rear wall, an upper wall, a lower wall, a left wall and a front wall, which are provided in front, rear, upper, lower, left and right directions to form the inner space.

The module case 210 may include a first case 217 and a second case 219. The first case 217 may be configured such that the second case 219 is stacked at the rear thereof in the Y direction. For example, as shown in FIG. 2, when viewed in the Y-axis direction, the battery module 200 may include the first case 217 and the second case 219 located at the rear of the first case 217. In the accommodation portion 212h of each of the first case 217 and the second case 219 have a plurality of hollow structures H1 in which front and rear portions of the cylindrical battery cells 100 are respectively inserted.

Meanwhile, referring to FIG. 5 along with FIG. 2, the bus bar 220 may electrically connect the plurality of cylindrical battery cells 100 to each other, and, for example, may electrically connect all cylindrical battery cells 100 to each other or some cylindrical battery cells 100 to each other. To this end, at least a portion of the bus bar 220 may be made of an electric conductivity material. For example, the bus bar 220 may be made of a metal material such as copper, aluminum and nickel. Moreover, the bus bar 220 may have a structure in which two plates made of different main materials are bonded to each other. For example, the bus bar 220 may have a form in which a plate made of nickel and a plate mainly made of copper are bonded.

In particular, as shown in FIG. 2, the bus bar 220 may include a body portion 222 and a connection portion 224.

Specifically, the body portion 222 of the bus bar 220 may be configured in a plate shape. Moreover, the bus bar 220 may be configured in the form of a metal plate to ensure rigidity and electric conductivity. In particular, the body portion 222 may be configured to stand upright in an upper and lower direction (Z-axis direction in the drawing) along the electrode terminals 111 of the plurality of cylindrical battery cells 100.

The connection portion 224 may have a connection hole K1 and a connection terminal 223. The connection hole K1 may be a hole perforated at a position corresponding to the electrode terminal 111 of the cylindrical battery cell 100. The connection terminal 223 may have a shape extending and protruding from the connection hole K1 to connect to the electrode terminal 111 of the cylindrical battery cell 100. The connection terminal 223 may be melted and bonded to the electrode terminal 111 by welding.

That is, in the present disclosure, if the plurality of cylindrical battery cells 100 are laid down and elongated in a front and rear direction (Y-axis direction in FIG. 2) and arranged in a left and right direction (X-axis direction in FIG. 2) and an upper and lower direction (Z-axis direction in FIG. 2), the electrode terminals 111 of the plurality of cylindrical battery cells 100 may be arranged at front and rear ends. In this case, the body portion 222 may be flatly extended in a left and right direction and an upper and lower direction in a plate shape according to the arrangement direction of the electrode terminals 111 of the plurality of cylindrical battery cells 100 and may be configured to stand upright based on the ground.

Moreover, external terminals 225 for sensing voltage by a sensing member (not shown) or transmitting power to the outside may be provided at left and right sides of the body portion 222 of the bus bar 220.

In addition, the bus bar 220 may contact the plurality of cylindrical battery cells 100 of the same polarity and electrically connect them in parallel. Alternatively, the bus bar 220 may contact electrode terminals 111 of some of the cylindrical battery cells 100 and electrically connect them in parallel and in series.

In addition, the fill material 230 has a material with insulation. The fill material 230 may be a glue or a hot-melt resin. For example, the material with electric insulation may be a polyamide resin, a polyimide resin, an epoxy resin or an acrylic resin. More specifically, Local 630 Resin (Austromelt), which is a polyamide-based resin, may be used as the hot melt resin. In addition, the material with electric insulation contains an insulating inorganic fill material. The inorganic fill material may be, for example, a glass fill material.

FIG. 5 is a perspective view schematically showing the battery module according to an embodiment of the present disclosure.

Referring to FIG. 5 along with FIG. 2, the fill material 230 may be hardened in a state of being filled between at least two of the plurality of cylindrical battery cells 100, the module case 210 and the bus bar 220. At this time, the polyamide-based resin of the fill material 230 may be melted at 200°C or higher. The fill material 230 has a short hardening time and thus may be easy for injection.

That is, the fill material 230 may be filled between at least two of the plurality of cylindrical battery cells 100, the module case 210 and the bus bar 220 by means of low-temperature low-pressure injection. Accordingly, the working time may also be reduced, which is advantageous for mass production.

For example, the manufacturing method of hardening the fill material 230 in a state of being filled between at least two of the plurality of cylindrical battery cells 100, the module case 210 and the bus bar 220 may include the steps of:
(a) assembling and preparing a plurality of cylindrical battery cells 100, a module case 210 and a bus bar 220;
(b) inserting the assembled components into a mold (not shown);
(c) injecting a molten fill material 230 between at least two of the plurality of cylindrical battery cells 100, the module case 210 and the bus bar 220 disposed in the mold through a plurality of injection ports (not shown) through which the molten fill material 230 may be injected into the mold; and
(d) sufficiently hardening the fill material 230 and then taking out the plurality of cylindrical battery cells 100, the module case 210 and the bus bar 220 filled with the fill material 230 from the mold.

In some cases, in the battery module 200, the fill material 230 may also be injected into the BMS 380 (see FIG. 2). Accordingly, the fill material 230 may be applied to surround the BMS 380 and then be hardened. Here, the BMS 380 refers to a battery management system that controls charging and discharging of the plurality of cylindrical battery cells.

For example, the fill material 230 may be hardened in a state of being filled between the plurality of cylindrical battery cells 100, the module case 210 and the bus bar 220. Specifically, the fill material 230 may be added between the accommodation portion 212h and the cylindrical battery cell 100 and then hardened to fix the accommodation portion 212h of the module case 210 and the cylindrical battery cell 100. In addition, the fill material 230 may be added between the bus bar 220 and the cylindrical battery cell 100 and between the bus bar 220 and an outer surface of the module case 210 and then hardened.

Therefore, according to this configuration of the present disclosure, since the battery module 200 of the present disclosure includes the fill material 230 having electric insulation and hardened in a state of being filled between at least two of the plurality of cylindrical battery cells 100, the module case 210 and the bus bar 220, it is possible to exclude a separate configuration provided to achieve electrical insulation between the bus bar 220 and other conductive objects, thereby reducing manufacturing cost and manufacturing time. In addition, since the fill material 230 may fix or protect a region where components of the battery module 200 are vulnerable to frequent vibrations or strong impacts, it is possible to improve durability of the components to which the fill material 230 is applied.

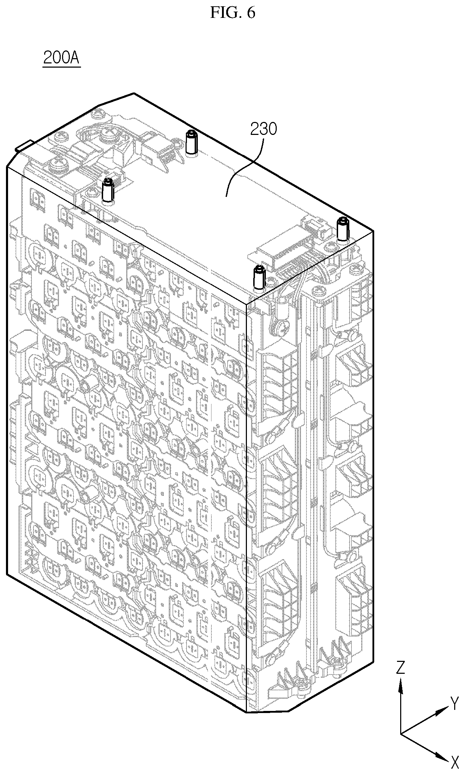

FIG. 6 is a perspective view schematically showing a battery module according to another embodiment of the present disclosure.

Referring to FIG. 6, in a battery module 200A according to another embodiment, the fill material 230 may be added to surround an outer surface of each of the plurality of cylindrical battery cells 100, the module case 210 and the bus bar 220 at least partially and be then hardened. For example, as shown in FIG. 6, the fill material 230 may be formed to surround the outer surfaces of all of the plurality of cylindrical battery cells 100, the module case 210 and the bus bar 220.

Therefore, according to this configuration of the present disclosure, the battery module 200A according to another embodiment may be easily manufactured since the process of filling and hardening the fill material 230 is simple. In addition, the shape of the fill material 230 surrounding all the components of the battery module 200A may prevent a rapid temperature change of the battery module 200A by adequately absorbing the heat generated inside by means of the sufficient heat capacity of the fill material 230.

Meanwhile, referring to FIGS. 1 and 2 again, the pack housing 310 may include a top cover 312, a middle housing 314, and a bottom support 316. Specifically, when viewed in the F direction, the middle housing 314 may be coupled to a lower portion of the top cover 312, and the bottom support 316 may be coupled to a lower portion of the middle housing 314. More specifically, the top cover 312 may include an upper wall and a side wall to cover the upper portion of the module case 210 accommodated in the pack housing 310. In addition, the middle housing 314 may have a rectangular tubular shape with open upper and lower portions. Further, the bottom support 316 has a box shape with an open top, and may include a side wall and a lower wall.

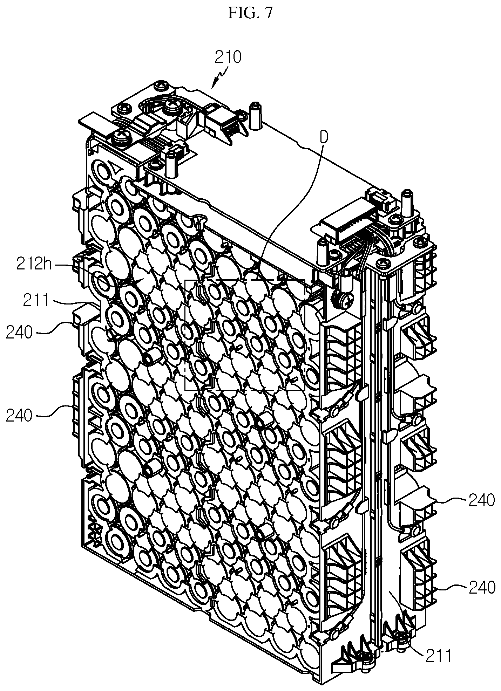

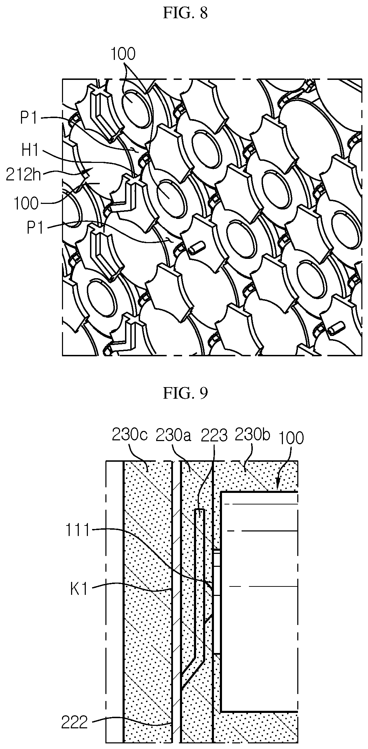

FIG. 7 is a perspective view schematically showing some components of the battery module according to an embodiment of the present disclosure. Also, FIG. 8 is a partial perspective enlarged view showing a region D of a plurality of cylindrical battery cells and a module case of the battery module according to an embodiment of the present disclosure.

Referring to FIGS. 7 and 8, the accommodation portion 212h of the module case 210 have an open structure P1 that is opened so that a side portion of the accommodated cylindrical battery cell 100 is exposed. The accommodation portion 212h is provided in the form of a hollow structure H1. At this time, the open structure P1 has a structure in which one side of the hollow structure H1 of the accommodation portion 212h is opened so that the side portion of the accommodated cylindrical battery cell 100 communicates with a side portion of another neighboring cylindrical battery cell 100. Accordingly, the plurality of cylindrical battery cells 100 may communicate with each other by the open structure P1 formed in a plurality of hollow structures H1 arranged in a left and right direction and an upper and lower direction.

In addition, the fill material 230 may have a structure of connecting the plurality of cylindrical battery cells 100 to each other through the open structure P1. As shown in FIG. 8, a part of the fill material 230 is filled in the open structure P1 among three cylindrical battery cells 100. That is, the fill material 230 may have a structure to connect the plurality of cylindrical battery cells 100 to each other.

Therefore, according to this configuration of the present disclosure, since the fill material 230 has a structure to connect the plurality of cylindrical battery cells 100 to each other through the open structure P1, the heat generated from the plurality of cylindrical battery cells 100 may be effectively transferred to the outside. In addition, the fill material 230 may protect the plurality of cylindrical battery cells 100 exposed to the outside from an external impact. Further, when the battery module 200 is exposed to a frequent vibration environment such as a vehicle, it is possible to stably fix the plurality of cylindrical battery cells 100, thereby improving durability of the plurality of cylindrical battery cells 100.

FIG. 9 is a partial sectional view schematically showing the battery module of FIG. 5, taken along the line C-C'.

Referring to FIG. 9 along with FIGS. 2 and 5, the fill material 230 may be filled between the connection hole K1 and the electrode terminal 111 at least partially. In addition, as shown in FIG. 9, the fill material 230 may be configured to be filled between the connection hole K1 and the electrode terminal 111. Also, the fill material 230 may be configured to be filled between the body portion 222 and the cylindrical battery cell 100.

Moreover, a part of the fill material 230 may be hardened in the form of surrounding a top end and a side portion of the cylindrical battery cell 100. For example, as shown in FIG. 9, the fill material 230 may have a region 230c located at the outer side of the body portion 222 of the bus bar 220, a region 230a located between the cylindrical battery cell 100 and the body portion 222 of the bus bar 220, and a region 230b applied to surround the outer surface of the cylindrical battery cell 100.

Therefore, according to this configuration of the present disclosure, the fill material 230 may help to maintain the coupled state of the connection terminal 223 and the electrode terminal 111. In addition, the fill material 230 may effectively transfer heat generated according to the electrical resistance between the connection terminal 223 and the electrode terminal 111 to the outside. Thus, it is possible to increase the heat dissipation characteristics of the plurality of cylindrical battery cells 100.

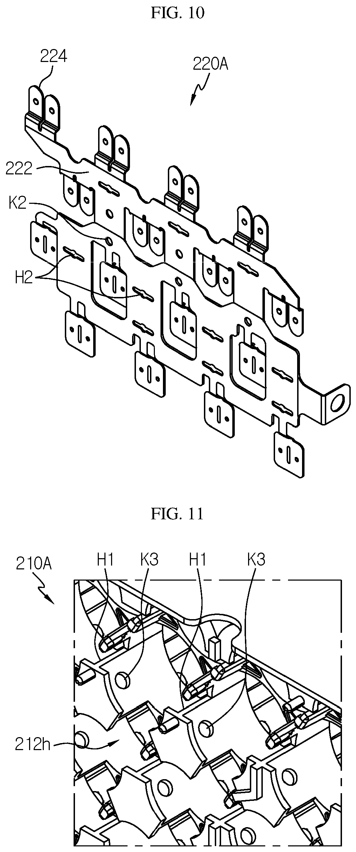

FIG. 10 is a perspective view schematically showing some bus bars of a battery module according to another embodiment of the present disclosure.

Referring to FIG. 10, in a bus bar 220A of the battery module according to another embodiment, an opening K2 may be formed in the body portion 222. The opening K2 may be configured such that the fill material 230 is introduced. In other words, when a melted fill material 230 is added outside the bus bar 220A, the fill material 230 may be introduced smoothly in a region where the connection hole K1 is formed, but the fill material 230 may not be introduced smoothly to an inside between one connection hole K1 and another neighboring connection hole K1.

Therefore, according to this configuration of the present disclosure, in the present disclosure, since the plurality of openings K2 are formed in the bus bar 220A, the melted fill material 230 is completely filled between the bus bar 220A and the module case 210 through the openings K2. Accordingly, the battery module 200 of the present disclosure has few empty spaces between the bus bar 220A and the module case 210, which are not filled with the fill material, so that heat may be accumulated in the empty space or the fixing force between the bus bar 220A and the module case 210 may be further increased.

Referring to FIG. 10 again, a plurality of fixing holes H2 may be formed in the body portion 222 of the bus bar 220A so that the fill material 230 is introduced therethrough. The fixing hole H2 may be formed by perforating a part of the body portion 222. In a perforated form, the fixing hole H2 may have a shape in which a groove extending in the left and right direction is formed from the circular opening K2.

For example, as shown in FIG. 10, ten fixing holes H2 may be formed in the bus bar 220A. Through the fixing holes H2, the fill material may be hardened in a state of being partially inserted.

Therefore, according to this configuration of the present disclosure, since the fixing hole H2 is formed in the body portion 222 of the bus bar 220A so that the fill material 230 is introduced therethrough, the coupling force between the fill material 230 and the bus bar 220A may be increased. Accordingly, it is possible to effectively prevent the movement (shaking) of the bus bar 220A caused by external impacts or external vibrations.

FIG. 11 is a partially enlarged view schematically showing the battery module according to another embodiment of the present disclosure, which corresponds to a region C of the module housing of FIG. 2.

Referring to FIG. 11, in the accommodation portion 212h of a module case 210A of FIG. 11, a plurality of hollow structures H1 may be arranged in a left and right direction. In this case, an inlet hole K3 may be formed in each of the plurality of hollow structures H1 formed in the accommodation portion 212h of the module case 210A. The inlet hole K3 may have a perforated shape by which one hollow structure H1 and another hollow structure H1 communicate with each other so that the fill material 230 is introduced. As shown in FIG. 11, in the hollow structure H1 of the module case 210A, the inlet hole K3 may be formed to communicate with the hollow structures H1 adjacent thereto in the left and right direction.

Therefore, according to this configuration of the present disclosure, in the present disclosure, since the inlet hole K3 is formed in the accommodation portion 212h of the module case 210A so that the fill material 230 is introduced, the fill material 230 may be properly introduced between the hollow structure H1 of the accommodation portion 212h and the cylindrical battery cell 100. Accordingly, by the fill material 230, the coupling force between the accommodation portion 212h and the cylindrical battery cell 100 may be increased. As a result, the durability of the battery module 200 may be increased.

That is, if the fill material 230 is added in a state where the plurality of cylindrical battery cells 100 are respectively inserted into the plurality of hollow structures H1 of the accommodation portion 212h, the fill material 230 may not be easily introduced between the hollow structure H1 and the cylindrical battery cell 100 facing each other. To compensate for this, the inlet hole K3 may be formed in the accommodation portion 212h, which may prevent the decrease in the coupling force between the accommodation portion 212h and the cylindrical battery cell 100.

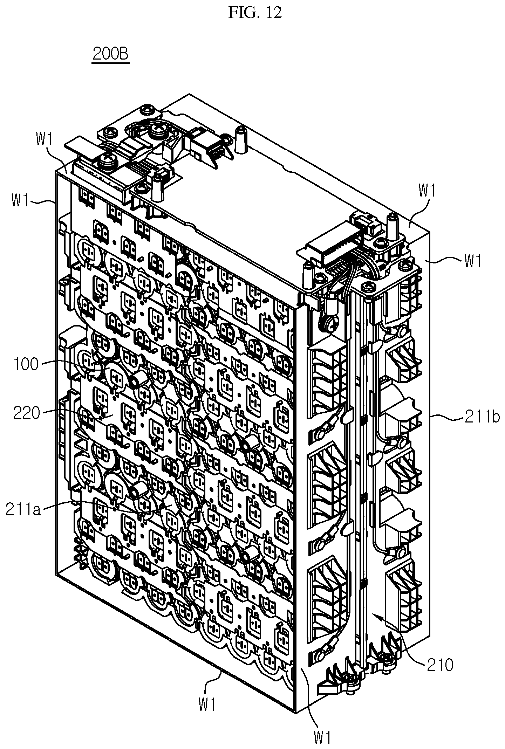

FIG. 12 is a perspective view schematically showing a battery module according to another embodiment of the present disclosure.

Referring to FIG. 12, a battery module 200B according to another embodiment of the present disclosure may further include a guide wall W1 protruding outward from the module case 210, when compared to the module case 210 of the battery module of FIG. 7.

Specifically, the guide wall W1 may have electric insulation. The guide wall W1 may be configured to guide the fill material 230 to be injected between at least two of the plurality of cylindrical battery cells 100, the module case 210 and the bus bar 220. For example, as shown in FIG. 12, the guide wall W1 protruding to the front may be provided to a front surface of the module case 210. The guide wall W1 may be formed to extend along a front edge of the module case 210.

That is, if the fill material 230 is injected between at least two of the plurality of cylindrical battery cells 100, the front outer wall 211a or the rear outer wall 211b of the module case 210, and the bus bar 220, the guide wall W1 may guide the fill material 230 to be evenly introduced and filled between the module case 210 and the plurality of cylindrical battery cells 100 and between the bus bar 220 and the module case 210.

In addition, by the guide wall W1, the fill material 230 may be intensively filled between at least two of the plurality of cylindrical battery cells 100, the module case 210 and the bus bar 220 by a protruding height of the guide wall W1. Accordingly, the fill material 230 may serve as a barrier that prevents the fill material 230 from being applied to a region out of the area where the fill material 230 should be applied.

Referring to FIG. 7 again along with FIG. 2, the module case 210 may include a bumper portion 240 to absorb an external shock applied to the battery module 200. Specifically, the bumper portion 240 may be formed at a position of the outer wall 211 of the module case 210, which faces the middle housing 314. The bumper portion 240 may have a shape protruding outward from an outer surface of the outer wall 211. For example, as shown in FIG. 7, the bumper portion 240 may be formed at each of a left outer wall 211 and a right outer wall 211 of the module case 210.

In addition, the bumper portion 240 may be configured such that a separated space is formed from the outer wall of the middle housing 314. That is, the bumper portion 240 may have a space separated from the outer wall of the middle housing 314 by a predetermined distance.

At this time, since the bumper portion 240 secures a separation distance from the outer wall of the middle housing 314, an external shock applied to the battery module 200 is not directly transmitted to the included cylindrical battery cell, but the bumper portion 240 collides with the middle housing 314 preferentially, so that the bumper portion 240 may absorb the external shock more.

Therefore, according to this configuration of the present disclosure, since the module case 210 includes the bumper portion 240 configured to absorb an external shock applied to the battery module 200, when an external shock is applied to the battery module 200, the bumper portion 240 is destroyed preferentially to absorb the impact, thereby protecting the cylindrical battery cell 100 included in the module case 210. As a result, it is possible to increase the stability of the battery module 200.

Meanwhile, a battery pack 300 according to an embodiment of the present disclosure may include at least one battery module 200 as above. In addition, the battery pack 300 may further include various devices (not shown) for controlling charging and discharging of the battery module 200, such as a battery management system (BMS) 380 (FIG. 2), a current sensor and a fuse.

Meanwhile, an electronic device (not shown) according to an embodiment of the present disclosure includes at least one battery pack 300 described above. The electronic device may further include a device housing (not shown) having an accommodation space for accommodating the battery module 200, and a display unit through which a user may check a SOC (State Of Charge) of the battery module 200.

In addition, the battery pack 300 according to an embodiment of the present disclosure may be included in a vehicle such as an electric vehicle or a hybrid electric vehicle. That is, the vehicle according to an embodiment of the present disclosure may include at least one battery pack 300 according to an embodiment of the present disclosure described above, which is mounted in a vehicle body.

Meanwhile, even though the terms indicating directions such as upper, lower, left, right, front and rear directions are used in the specification, it is obvious to those skilled in the art that these merely represent relative positions for convenience in explanation and may vary based on a position of an observer or an object.

### Reference Signs

| | | | |
|---|---|---|---|
| 300: | battery pack | | |
| 100: | cylindrical battery cell | 200: | battery module |
| 210: | module case | 220: | bus bar |
| 111, 111a, 111b: | electrode terminal, positive electrode terminal, negative electrode terminal | | |
| 230: | fill material | 212h: | accommodation portion |
| 211: | outer wall | H1: | hollow structure |
| P1: | open structure | | |
| 310: | pack housing | K1: | connection hole |
| 312: | top cover | 223: | connection terminal |
| 314: | middle housing | 316: | bottom support |
| 240: | bumper portion | K2: | opening |
| H2: | fixing hole | K3: | inlet hole |
| W1: | guide wall | | |

## Claims

1. A battery module (200), comprising:
a plurality of cylindrical battery cells (100);
a module case (210) having an accommodation portion (212h) for accommodating the plurality of cylindrical battery cells (100), the accommodation portion (212h) is provided in the form of a hollow structure (H1);
a bus bar (220) including a body portion (222) having electric conductivity and configured in a plate shape, and a connection portion (224) configured to electrically connect the plurality of cylindrical battery cells (100) to each other;
a fill material (230) having electric insulation and hardened in a state of being filled between at least two of the plurality of cylindrical battery cells (100), the module case (210) and the bus bar (220); and
an inlet hole (K3) is formed in the accommodation portion (212h) of the module case (210) so that the fill material (230) is introduced therethrough and has a perforated shape,
wherein the accommodation portion (212h) has an open structure (P1) that is opened so that side portions of the plurality of cylindrical battery cells accommodated therein are exposed to each other,
the open structure (P1) has a structure in which one side of the hollow structure (H1) of the accommodation portion (212h) is opened so that the side portion of the accommodated cylindrical battery cell (100) communicates with a side portion of another neighboring cylindrical battery cell (100), and
the fill material (230) has a structure that connects the plurality of cylindrical battery cells to each other through the open structure (P1) and the fill material (230) is filled in the open structure (P1) among three cylindrical battery cells (100).

2. The battery module according to claim 1,
wherein the fill material (230) is configured to surround at least a part of an outer surface of each of the plurality of cylindrical battery cells, the module case and the bus bar.

3. The battery module according to claim 1,
wherein the connection portion of the bus bar includes:
a connection hole (K1) perforated at a location corresponding to an electrode terminal of the cylindrical battery cell; and
a connection terminal (223) configured to extend and protrude from the connection hole (K1) to be connected to the electrode terminal of the cylindrical battery cell,
wherein the fill material (230) is filled between the connection hole (K1) and the electrode terminal at least partially.

4. The battery module according to claim 1,
wherein an opening (K2) is formed in the body portion of the bus bar so that the fill material (230) is introduced therethrough.

5. The battery module according to claim 4,
wherein a fixing hole (H2) is formed in the body portion of the bus bar so that the fill material (230) is introduced therethrough.

6. The battery module according to claim 1,
wherein the module case includes a guide wall (W1) having electric insulation and configured to protrude outward so that the fill material (230) is guided to be injected between at least two of the plurality of cylindrical battery cells, the module case and the bus bar.

7. A battery pack, comprising at least one battery module according to any one of claims 1 to 6.

8. A vehicle, comprising at least one battery pack according to claim 7.

## Patentansprüche

1. Batteriemodul (200), umfassend:
eine Mehrzahl von zylindrischen Batteriezellen (100);
ein Modulgehäuse (210), welches einen Aufnahmeabschnitt (212h) zum Aufnehmen der Mehrzahl von zylindrischen Batteriezellen (100) aufweist, wobei der Aufnahmeabschnitt (212h) in der Form einer Hohlstruktur (H1) bereitgestellt ist;
eine Stromschiene (220), welche einen Körperabschnitt (222), welcher eine elektrische Leitfähigkeit aufweist und in einer Plattenform eingerichtet ist, und einen Verbindungsabschnitt (224) umfasst, welcher dazu eingerichtet ist, die Mehrzahl von zylindrischen Batteriezellen (100) elektrisch miteinander zu verbinden;
ein Füllmaterial (230), welches eine elektrische Isolierung aufweist und in einem Zustand ausgehärtet ist, in welchem es zwischen wenigstens zwei der Mehrzahl von zylindrischen Batteriezellen (100), das Modulgehäuse (210) und die Stromschiene (220) gefüllt ist; und
ein Einlassloch (K3), welches in dem Aufnahmeabschnitt (212h) des Modulgehäuses (210) gebildet ist, sodass das Füllmaterial (230) dadurch eingeführt ist und eine perforierte Form aufweist,
wobei der Aufnahmeabschnitt (212h) eine offene Struktur (P1) aufweist, welche geöffnet ist, sodass Seitenabschnitte der Mehrzahl von zylindrischen Batteriezellen, welche darin aufgenommen sind, zueinander freigelegt sind, wobei die offene Struktur (P1) eine Struktur aufweist, bei welcher eine Seite der Hohlstruktur (H1) des Aufnahmeabschnitts (212h) geöffnet ist, sodass der Seitenabschnitt der aufgenommenen zylindrischen Batteriezelle (100) mit einem Seitenabschnitt einer weiteren benachbarten zylindrischen Batteriezelle (100) kommuniziert, und
wobei das Füllmaterial (230) eine Struktur aufweist, welche die Mehrzahl von zylindrischen Batteriezellen durch die offene Struktur (P1) miteinander verbindet und das Füllmaterial (230) in der offenen Struktur (P1) zwischen drei zylindrische Batteriezellen (100) gefüllt ist.

2. Batteriemodul nach Anspruch 1,
wobei das Füllmaterial (230) dazu eingerichtet ist, wenigstens einen Teil einer Außenfläche jeder der Mehrzahl von zylindrischen Batteriezellen, des Modulgehäuses und der Stromschiene zu umgeben.

3. Batteriemodul nach Anspruch 1,
wobei der Verbindungsabschnitt der Stromschiene umfasst:
ein Verbindungsloch (K1), welches an einer Position perforiert ist, welche einem Elektrodenanschluss der zylindrischen Batteriezelle entspricht; und
einen Verbindungsanschluss (223), welcher dazu eingerichtet ist, sich von dem Verbindungsloch (K1) zu erstrecken und hervorzustehen, um mit dem Elektrodenanschluss der zylindrischen Batteriezelle verbunden zu sein, wobei das Füllmaterial (230) wenigstens teilweise zwischen das Verbindungsloch (K1) und den Elektrodenanschluss gefüllt ist.

4. Batteriemodul nach Anspruch 1,
wobei eine Öffnung (K2) in dem Körperabschnitt der Stromschiene gebildet ist, sodass das Füllmaterial (230) dadurch eingeführt wird.

5. Batteriemodul nach Anspruch 4,
wobei ein Befestigungsloch (H2) in dem Körperabschnitt der Stromschiene gebildet ist, sodass das Füllmaterial (230) dadurch eingeführt wird.

6. Batteriemodul nach Anspruch 1,
wobei das Modulgehäuse eine Führungswand (W1) umfasst, welche eine elektrische Isolierung aufweist, und dazu eingerichtet ist, nach außen vorzustehen, sodass das Füllmaterial (230) derart geführt ist, dass es zwischen wenigstens zwei der Mehrzahl von zylindrischen Batteriezellen, das Modulgehäuse und die Stromschiene injiziert ist.

7. Batteriepack, umfassend wenigstens ein Batteriemodul nach einem der Ansprüche 1 bis 6.

8. Fahrzeug, umfassend wenigstens einen Batteriepack nach Anspruch 7.

## Revendications

1. Module de batterie (200), comprenant :
une pluralité d'éléments de batterie cylindriques (100) ;
une enceinte de module (210) ayant une partie d'accueil (212h) pour accueillir la pluralité d'éléments de batterie cylindriques (100), la partie d'accueil (212h) est prévue sous la forme d'une structure creuse (H1) ;
une barre omnibus (220) comportant une partie corps (222) ayant une conductivité électrique et configurée en forme de plaque, et une partie de connexion (224) configurée pour connecter électriquement la pluralité d'éléments de batterie cylindriques (100) les uns aux autres ;
un matériau de remplissage (230) ayant une isolation électrique et durci dans un état où il est introduit entre au moins deux parmi la pluralité d'éléments de batterie cylindriques (100), l'enceinte de module (210) et la barre omnibus (220) ; et
un orifice d'entrée (K3) est formé dans la partie d'accueil (212h) de l'enceinte de module (210) de sorte que le matériau de remplissage (230) soit introduit dans celui-ci et a une forme perforée,
dans lequel la partie d'accueil (212h) a une structure ouverte (P1) qui est ouverte de sorte que des parties latérales de la pluralité d'éléments de batterie cylindriques accueillis dans celle-ci soient exposées les unes aux autres,
la structure ouverte (P1) a une structure dans laquelle un côté de la structure creuse (H1) de la partie d'accueil (212h) est ouvert de sorte que la partie latérale de l'élément de batterie cylindrique (100) accueilli communique avec une partie latérale d'un autre élément de batterie cylindrique (100) voisin, et
le matériau de remplissage (230) a une structure qui relie la pluralité d'éléments de batterie cylindriques les uns aux autres à travers la structure ouverte (P1), et le matériau de remplissage (230) est introduit dans la structure ouverte (P1) entre trois éléments de batterie cylindriques (100).

2. Module de batterie selon la revendication 1,
dans lequel le matériau de remplissage (230) est configuré pour entourer au moins une partie d'une surface extérieure de chacun de la pluralité d'éléments de batterie cylindriques, de l'enceinte de module et de la barre omnibus.

3. Module de batterie selon la revendication 1,
dans lequel la portion de connexion de la barre omnibus comporte :
un trou de connexion (K1) perforé à un emplacement correspondant à une borne d'électrode de l'élément de batterie cylindrique ; et
une borne de connexion (223) configurée pour s'étendre et faire saillie à partir du trou de connexion (K1) pour être connectée à la borne d'électrode de l'élément de batterie cylindrique,
dans lequel le matériau de remplissage (230) est introduit au moins partiellement entre le trou de connexion (K1) et la borne d'électrode.

4. Module de batterie selon la revendication 1,
dans lequel une ouverture (K2) est formée dans la partie corps de la barre omnibus de sorte que le matériau de remplissage (230) soit introduit dans celle-ci.

5. Module de batterie selon la revendication 4,
dans lequel un trou de fixation (H2) est formé dans la partie corps de la barre omnibus de sorte que le matériau de remplissage (230) soit introduit dans celui-ci.

6. Module de batterie selon la revendication 1,
dans lequel l'enceinte de module comporte une paroi de guidage (W1) ayant une isolation électrique et configurée pour faire saillie vers l'extérieur de sorte que le matériau de remplissage (230) soit guidé pour être injecté entre au moins deux parmi la pluralité d'éléments de batterie cylindriques, l'enceinte de module et la barre omnibus.

7. Bloc-batterie, comprenant au moins un module de batterie selon l'une quelconque des revendications 1 à 6.

8. Véhicule, comprenant au moins un bloc-batterie selon la revendication 7.
